# EUROPEAN PATENT APPLICATION

(11) **EP 4 841 660 A1**
(43) Date of publication of application: **18.11.2026**
(21) Application number: 25176938.6
(22) Date of filing: 16.05.2025
(51) Int. Cl.: H01F 7/18, F01P 7/14, F16K 37/00

(54) **METHOD FOR DETERMINING A STATE OF A VALVE FOR A COOLING CIRCUIT OF A VEHICLE, METHOD FOR OPERATING A VALVE ASSEMBLY FOR A COOLING CIRCUIT OF A VEHICLE, DATA PROCESSING APPARATUS, COMPUTER PROGRAM, COMPUTER READABLE STORAGE MEDIUM, VALVE SYSTEM, AND COOLING CIRCUIT FOR A VEHICLE**

(71) Applicant: Volvo Car Corporation, 405 31 Göteborg (SE)
(72) Inventor: RÅBERG, Andreas, 40531 Göteborg (SE)
(74) Representative: Kransell & Wennborg KB

(57) **Abstract**

The disclosure relates to a method for determining a state of a valve (22) for a cooling circuit (10) of a vehicle, wherein the valve (22) is a normally closed valve (22) and wherein the valve (22) is coupled to a solenoid actuator (24). The method comprises obtaining first data indicative of a current in the solenoid actuator (24) after the valve (22) has been requested to open. Further, it is determined whether the valve (22) has actually opened or has remained closed based on the first data. Additionally, second data indicative of the state of the valve (22) is provided. The disclosure also relates to a method for operating a valve assembly (20) for a cooling circuit (10) of a vehicle. Moreover, the disclosure is directed to a data processing apparatus (32), a computer program (40), and a computer-readable storage medium (48). Furthermore, a valve system (14) and a cooling circuit (10) are presented

## Description

### TECHNICAL FIELD

The present disclosure relates to a method for determining a state of a valve for a cooling circuit of a vehicle.

The disclosure is additionally directed to a method for operating a valve assembly for a cooling circuit of a vehicle.

Furthermore, the disclosure is about a data processing apparatus comprising means for carrying out at least one of the methods mentioned above.

Moreover, the disclosure is about a computer program comprising instructions which, when the program is executed by a computer, cause the computer to carry out at least one of the methods mentioned above.

Further, the disclosure is about a computer-readable storage medium comprising instructions which, when executed by a computer, cause the computer to carry out at least one of the methods mentioned above.

In addition, the disclosure is about a valve system comprising a data processing apparatus mentioned above.

Moreover, the disclosure is about a cooling circuit for a vehicle, the cooling circuit comprising a coolant channel and a valve system as mentioned above.

### BACKGROUND

Cooling circuits for vehicles commonly comprise valves. The valves are often individually controlled and are used, for example, to adjust the flow rate of cooling fluid through the cooling circuit or portions of the cooling circuit. Accordingly, the cooling circuit or its portions can be opened or closed by such valves, for example, in order to enable or block a flow of coolant through the cooling circuit or through portions of the cooling circuit. Often, so-called normally closed valves are used for this purpose. These are valves that are normally in a closed position so that the valve does not allow a flow of cooling fluid. For example, this is achieved by the valves being held in the closed position by a spring force. The valve may be adjusted from the closed position to the open position using an actuator. In some cases, the valve may be stuck, and it may no longer be possible for the actuator to open the valve. As a result, vehicle components thermally coupled with the cooling circuit may not be sufficiently cooled. This can damage the affected vehicle components or increase wear. Consequently, it may be necessary to monitor the state of the valve in order to recognize when a valve is stuck.

This can typically be realized in different ways. In a first alternative, it is possible to install a position sensor that is assigned to the valve or the actuator and can be used to recognize whether the valve is adjusted via the actuator when the valve is requested to be opened. Accordingly, the valve or the actuator must be adapted to enable the implementation of a position sensor.

In a second alternative, the temperature of the vehicle components or sections of the cooling circuit assigned to the cooling circuit can also be monitored in order to be able to recognize local temperature increases and thus draw conclusions about a stuck valve. However, this method is not particularly accurate or reliable. This is mainly due to the fact that there are temperature fluctuations in the cooling circuit anyway, which are associated with different driving conditions or environmental conditions, so that not every local temperature increase necessarily indicates that a valve is stuck. In addition, such an approach is subject to a certain time delay, as local temperature increases often only occur after the valve has already been stuck for a certain period of time. Due to the indirect measurement, a stuck valve is often recognized late.

In a third alternative, it may also be possible to monitor a coolant pump assigned to the cooling circuit in order to determine whether a valve is stuck. For example, the pump speed of the pump can be monitored in order to conclude from the behaviour of the pump speed whether a valve is stuck, since a stuck valve creates a resistance in the cooling circuit and can thus influence the pump speed of the pump. However, this approach has also turned out to be unreliable, as there are many other influences acting on the pump that can affect its and the pump speed in particular. It is also necessary to use additional sensors to measure the pump speed which results in additional costs.

### SUMMARY

An objective of the present disclosure is, therefore, to provide a method for determining a state of a valve in a reliable and simple manner.

The problem is at least partially solved or alleviated by the subject matter of the independent claims of the present disclosure, wherein further examples are incorporated in the dependent claims.

According to a first aspect, there is provided a method for determining a state of a valve for a cooling circuit of a vehicle. The valve is a normally closed valve. Further, the valve is coupled to a solenoid actuator. The method comprises:
- obtaining first data indicative of a current in the solenoid actuator after the valve has been requested to open,
- determining whether the valve has actually opened or has remained closed based on the first data, and
- providing second data indicative of the state of the valve.

The general observation underlying the method for determining a state of a valve for a cooling circuit of a vehicle is that the current in the solenoid actuator after the valve has been requested to open is dependent on the state of the valve, i.e. on the fact whether the valve actually opens or not. This allows conclusions to be drawn about the status of the valve from the behaviour of the current in the solenoid actuator. Accordingly, in the present method, after the valve has been requested to open, the first data indicative of a current in the solenoid actuator is obtained in order to assess the behaviour of the current in the solenoid actuator. Based on this, it is determined whether the valve has actually opened or has remained closed. In turn, the state of the valve can be provided. The state of a valve may be "not stuck" or "stuck". The "not stuck" state of the valve is present if the valve opens when it has been requested to open. The "stuck" state of the valve is present when the valve does not open, when it has been requested to open. This procedure is particularly advantageous, as the current in the solenoid actuator can be used to detect the status of the valve particularly easily and reliably. A sensor can be provided to monitor the current. Such a sensor is space-saving and inexpensive. In particular, it is conceivable that the sensor is implemented in the form of a software component. Consequently, the current sensor does not necessarily have to be a physical sensor. In particular, the software component may be or form part of a driver of an inverter, whereby the inverter is assigned to the solenoid actuator. This is, therefore, a particularly space-saving variant, as no physical sensor needs to be provided. Accordingly, the method allows a particularly reliable determination of a state of the valve and can be implemented cost-effectively and in a space-saving manner.

It is noted in the context of the present disclosure, normally closed valve means that the valve is closed in the normal state, i.e. when not powered or actuated, and can only be adjusted from the closed position to the open position by an adjustment by means of the actuator.

In addition, it is noted in the context of the present disclosure, that the valve has opened means that the cooling circuit or a part of the cooling circuit is opened by the opened valve, such that coolant can flow through the cooling circuit or a part of the cooling circuit.

Furthermore, it is noted in the context of the present disclosure, that the valve has remained closed means that the cooling circuit or part of the cooling circuit is blocked by the closed valve, such that no or only a small amount of coolant can flow through the cooling circuit or a part of the cooling circuit.

Further, it is noted that in the context of the present disclosure, the primary function of the cooling circuit of a vehicle may be to cool vehicle components. In addition, the secondary function of the cooling circuit of a vehicle may be to lubricate the vehicle components.

Further, it is noted that in the context of the present disclosure, the valve may be a valve without position sensors.

According to an example, the first data may be indicative of a transient current in the solenoid actuator after the valve has been requested to open. This means that the first data may cover the time directly after requesting the valve to open. In the present case, directly after may be understood to mean, for example, a period of the first 80 ms after the request to open. However, this time span may be adapted based on the specific application. It has proven to be particularly advantageous to determine whether the valve has actually opened or has remained closed on the basis of the transient current in the solenoid actuator. Consequently, the status of the valve may be determined particularly accurately and reliably on the basis of the transient current.

According to an example, the transient current may comprise a current dip following a change of impedance of the solenoid actuator due to a plunger movement, if the valve has actually opened, and, otherwise, the transient current does not comprise a current dip. The current dip may be recognized particularly easily in the transient current, so that the determination based on the first data may be realized with relatively small effort. Furthermore, the current dip is a clear indication of the state of the valve, as this is necessarily accompanied by a movement of the plunger due to a change of impedance of the solenoid. Consequently, it is possible to determine particularly reliably and precisely whether the valve has actually opened or has remained closed base. This also prevents parts of the current being considered that are not relevant for determining the state of the valve. As a result, the amount of data may be reduced. Thus, less computing power is required to evaluate the data.

According to an example, determining whether the valve has actually opened or has remained closed may be based on a trained data model. The first data may be an input for the trained data model. Further, the second data may be an output of the data model. In this variant, the determination is therefore generally based on a trained data model. The trained data model enables a simple implementation for different types of valves with solenoid actuators. Moreover, the trained data model may provide the second data in a reliable manner. The trained data model may be based on machine learning. The trained data model may be an artificial neural network.

It is noted that in an example, in which a trained data model is used, the data model needs to be trained before it is suitable for determining a state of a valve, i.e. provide second data as an output. The training data may comprise data indicative of a current in the solenoid actuator after the valve has been requested to open which is annotated by data indicative of the state of the valve. This means that the labels whether the valve is "open" or "remained closed", for example. This corresponds to first data annotated with second data, wherein it is understood that the training takes place before the actual first data is received as an input to the trained data model. The training data may be generated in a laboratory during development of the normally closed valve, based on a simulation and/or during test uses of the normally closed valve.

According to an example, determining whether the valve has actually opened or has remained closed may comprise:
- Fourier transforming the first data into a frequency domain,
- selecting a frequency in the frequency domain, and
- comparing the selected frequency to a predefined frequency threshold.

In this variant, the determination is therefore generally based on a Discrete Fourier Transform of the current in the solenoid actuator. This procedure has proven to be an effective and reliable variant for determining whether the valve has actually opened or has remained closed based on the first data. Furthermore, the determination is simplified by the fact that only a single frequency in the frequency domain may be used and is compared with a single frequency threshold. The predefined frequency threshold may be based on experimentally determined data. Additionally or alternatively, the predefined frequency threshold may also be based on historical data collected during a driving operation. The selected frequency may be a fundamental. In particular, the selected frequency may be the first fundamental. This is particularly advantageous because the inductivity of the solenoid of the solenoid actuator is proportional to the first fundamental frequency.

According to an example, determining whether the valve has actually opened or has remained closed may comprise:
- calculating a sum of a plurality of samples of the first data, and
- comparing the calculated sum to a predefined sum threshold.

With this variant, the determination is therefore generally based on a cumulative sum of the current in the solenoid actuator. This procedure has also proven to be an effective and reliable variant. The predefined sum threshold may be based on experimentally determined data. Additionally or alternatively, the predefined sum threshold may also be based on historical data collected during a driving operation. The threshold may be determined as follows. Firstly, a mean of one of a plurality of samples of data indicative of a current in the solenoid actuator may be calculated, which were determined experimentally, for example, or are based on historical data collected during a driving operation. In the next step, the mean may be used to remove any offset that may be present. In the next step, if the values of the plurality of samples are negative, all values may be made positive, for example by adding a certain amount to each value. In the next step, the sum of all values may be calculated and the threshold derived from this.

According to an example, determining whether the valve has actually opened or has remained closed may comprise:
- calculating a derivative of the current based on the first data,
- filtering the calculated derivative,
- comparing the filtered derivative to a predefined derivative threshold.

In this variant, the determination is therefore generally based on a derivative of the current in the solenoid actuator. This procedure has also proven to be an effective and reliable variant. The predefined derivative threshold may be based on experimentally determined data. Additionally or alternatively, the predefined derivative threshold may also be based on historical data collected during a driving operation. Filtering the calculated derivative may comprise applying Butterworth Low Pass (LP) filter. In particular, filtering the calculated derivative may comprise applying a third order Butterworth LP filter. The Butterworth LP filter is a particularly stable filter.

According to an example, determining whether the valve has actually opened or has remained closed may comprise:
- obtaining third data indicative of a regression curve for a historic current in the solenoid actuator after the valve has been requested to open,
- calculating an error indicator indicative of a difference between the first data and the third data, and
- comparing the error indicator to an error indicator threshold.

With this variant, the determination is therefore generally based on a regression curve of a historic current in the solenoid actuator. This variant has also proven to be an effective and reliable variant. The error indicator threshold may be based on experimentally determined data. Additionally or alternatively, the error indicator threshold may also be based on historical data collected during a driving operation. The third data indicative of a regression curve may also be indicative of at least two regression curves. At least two regression curves are especially advantageous, as this allows a particularly accurate determination of whether the valve has actually opened or has remained closed. According to an alternative, this variant may also include filtering the first data. In particular, it is conceivable that filtering the first data may comprise applying a high pass filter. This may distort the signal. In particular, filtering the first data may comprise applying a Butterworth High Pass (HP) filter. The sampling frequency may be 500 Hz, for example. According to a further alternative, instead of filtering the first data, this variant may also include calculating a standard deviation. In this case, the deviation to the mean is determined and divided by the standard deviation. Furthermore, for both of the above alternatives, this variant may additionally comprise extracting a sequence of the first data.

According to an example, the method may further comprise obtaining fourth data indicative of an environmental condition of the valve and determining whether the valve has actually opened or has remained closed further based on the fourth data. This may additionally improve the accuracy and reliability of the method, as environmental conditions are considered, which may also affect the behaviour of the valve and the solenoid actuator and thus also may influence the first data.

According to an example, the fourth data may be indicative of an ambient temperature and/or an ambient temperature history. In particular, the ambient temperature and the ambient temperature history may have an effect on the behaviour of the valve und the viscosity of the coolant and therefore also on the solenoid actuator. It is therefore particularly advantageous to take these into account in order to reliably determine whether the valve has actually opened or has remained closed based on the first data.

The problem is further at least partially solved or alleviated by a method for operating a valve assembly for a cooling circuit of a vehicle, the valve assembly comprising a normally closed valve and a solenoid actuator coupled to the normally closed valve. The method comprises:
- requesting the valve to open,
- determining a state of a valve using the method for determining a state of a valve for a cooling circuit of a vehicle according to the present disclosure,
- triggering a mitigation measure if the valve has remained closed or, otherwise, abandoning the method.

Thus, using this method, a state of a valve may be determined simply and reliably. Furthermore, if the valve remains closed because it is stuck, a mitigation measure ensures that any overheating of a vehicle component thermally coupled to the cooling circuit resulting from the stuck valve may be prevented or at least reduced. Consequently, it may also be ensured that damage or wear caused by overheating of the vehicle component is prevented or at least reduced.

The method for determining a state of a valve for a cooling circuit of a vehicle and/or the method for operating a valve assembly for a cooling circuit of a vehicle may be at least partly computer-implemented, and may be implemented in software or in hardware, or in software and hardware. Further, the methods may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

The problem is further at least partially solved or alleviated by a data processing apparatus comprising means for carrying out the method for determining a state of a valve for a cooling circuit of a vehicle of the present disclosure and/or comprising means for carrying out the method for operating a valve assembly for a cooling circuit of a vehicle of the present disclosure. Such a data processing apparatus ensures to determine whether the valve has actually opened or has remained closed in a simple reliable way. In this way, either the state of the valve may be effectively provided or, in the event that the valve is stuck, a mitigation measure may be triggered to ensure that vehicle components thermally coupled with the cooling circuit are protected from wear and damage.

The problem is further at least partially solved or alleviated by a computer program comprising instructions which, when the computer program is executed by a computer, cause the computer to carry out the method for determining a state of a valve for a cooling circuit of a vehicle of the present disclosure and/or cause the computer to carry out the method for operating a valve assembly for a cooling circuit of a vehicle of the present disclosure. Such a computer program also ensures to determine whether the valve has actually opened or has remained closed in a simple reliable way. In this way, either the state of the valve may be effectively provided or, in the event that the valve is stuck, a mitigation measure may be triggered to ensure that vehicle components thermally coupled with the cooling circuit are protected from wear and damage.

The problem is further at least partially solved or alleviated by a computer-readable storage medium comprising instructions which, when executed by a computer, cause the computer to carry out the method for determining a state of a valve for a cooling circuit of a vehicle of the present disclosure and/or cause the computer to carry out the method for operating a valve assembly for a cooling circuit of a vehicle of the present disclosure. Such a computer-readable storage medium ensures to determine whether the valve has actually opened or has remained closed in a simple reliable way. In this way, either the state of the valve may be effectively provided or, in the event that the valve is stuck, a mitigation measure may be triggered to ensure that vehicle components thermally coupled with the cooling circuit are protected from wear and damage.

The problem is further at least partially solved or alleviated by a valve system comprising the data processing apparatus of the present disclosure and a valve assembly for a cooling circuit of a vehicle. The valve assembly comprises a normally closed valve and a solenoid actuator coupled to the normally closed valve. The solenoid actuator is communicatively connected to the data processing apparatus. In such a valve system it may be determined in a simple reliable way whether the valve has actually opened or has remained closed, since the data processing apparatus is communicatively connected to the solenoid actuator. This enables the data processing apparatus to obtain the first data indicative of a current in the solenoid actuator after the valve has been requested to open. In this way, either the state of the valve may be effectively provided or, in the event that the valve is stuck, a mitigation measure may be triggered to ensure that vehicle components thermally coupled with the cooling circuit are protected from wear and damage.

The problem is further at least partially solved or alleviated by a cooling circuit for a vehicle, the cooling circuit comprising a coolant channel and a valve system according to the present disclosure. The valve system is fluidically coupled to the coolant channel. In such a cooling circuit it may be determined in a simple reliable way whether the valve has actually opened or has remained closed, since the data processing apparatus is communicatively connected to the solenoid actuator. Further, either the state of the valve may be effectively provided or, in the event that the valve is stuck, a mitigation measure may be triggered to ensure that vehicle components thermally coupled with the cooling circuit are protected from wear and damage.

It should be noted that the above examples may be combined with each other irrespective of the aspect involved. Accordingly, the method may be combined with structural features and, likewise, the apparatus and the system may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: schematically shows a cooling circuit for a vehicle according to the present disclosure comprising a coolant channel and a valve system according to the present disclosure,
- Figure 2: shows a valve system according to the present disclosure comprising a data processing apparatus according to the present disclosure for carrying out the method for determining a state of a valve for a cooling circuit of a vehicle of the present disclosure and/or for carrying out the method for operating a valve assembly for a cooling circuit of a vehicle of the present disclosure,
- Figure 3: illustrates steps of the method of the present disclosure for operating a valve assembly for a cooling circuit of a vehicle operating and the method of the present disclosure for determining a state of a valve for a cooling circuit of a vehicle,
- Figure 4: shows a diagram in which current samples and voltage samples of a solenoid actuator are plotted over time,
- Figure 5: shows a diagram in which current samples of the solenoid actuator are plotted over time in a transient state,
- Figure 6: shows a schematic representation of a trained data model,
- Figure 7: shows a diagram in which two groups of measurements of filtered current samples are represented,
- Figure 8: shows a diagram in which a frequency in the frequency domain is plotted against a selected frequency,
- Figure 9: shows a diagram in which current samples of the solenoid actuator are plotted over time in a transient state,
- Figure 10: shows the diagram form Figure 4 in which current samples of the solenoid of the solenoid actuator are plotted over time in a transient state in a sliced modified representation,
- Figure 11: shows a diagram in which calculated groups of sum values of the groups of measurements are shown,
- Figure 12: shows a diagram in which a plurality of unfiltered derivatives of the current of a plurality of measurement samples forming two groups of derivatives are shown,
- Figure 13: shows a diagram in which two filtered groups of derivatives are shown,
- Figure 14: shows a diagram in which a group of measurements of current samples of the solenoid actuator is shown, to which a high pass (HP) filter was applied,
- Figure 15: shows a diagram in which a group of measurements of current samples of the solenoid actuator is shown, to which a high pass (HP) filter was applied,
- Figure 16: shows a diagram in which two groups of calculated points are shown, wherein each corresponds to an error indicator,
- Figure 17: shows a diagram in which a group of measurements of a normalized current samples of the solenoid actuator is shown,
- Figure 18: shows a diagram in which a group of measurements of normalized current samples the solenoid actuator is shown, and
- Figure 19: shows a diagram in which two groups of calculated points which each correspond to an error indicator for each of the groups of measurements are shown.

### DETAILED DESCRIPTION

The Figures are merely schematic representations and serve only to illustrate examples of the disclosure. Identical or equivalent elements are in principle provided with the same reference signs.

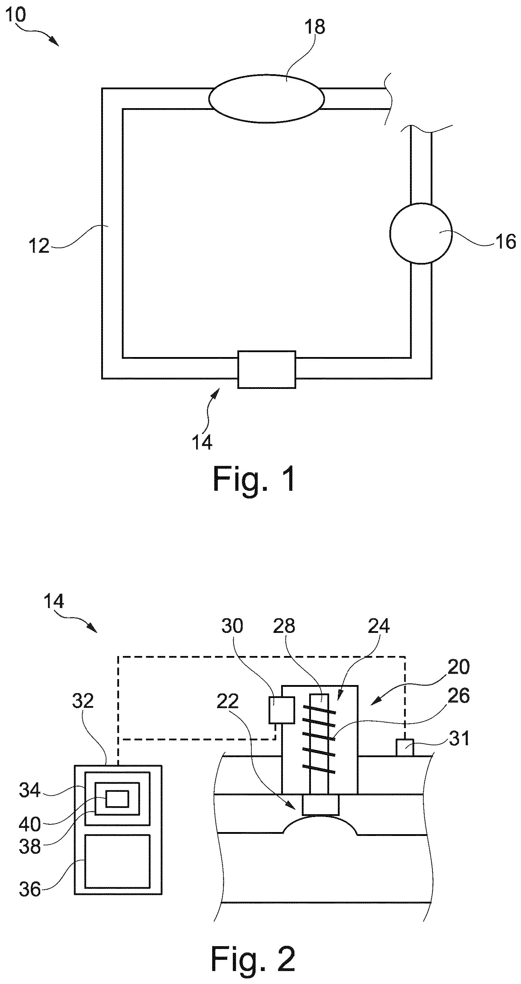

Figure 1 shows a cooling circuit 10 for a vehicle comprising a coolant channel 12 and a valve system 14. The valve system 14 is fluidically coupled to the coolant channel 12.

The cooling circuit 10 further comprises a pump 16. Further a vehicle component 18 is assigned to the cooling circuit 10. The vehicle component 18 may be cooled in the cooling circuit 10 by cooling fluid circulating by means of the pump 16. In addition, the circulating cooling fluid of the cooling circuit 10 may lubricate the vehicle component 18.

The vehicle component 18 is for example an electric traction machine or a traction battery of the vehicle.

Figure 1 shows the valve system 14 in more detail. The valve system 14 comprises a valve assembly 20 for the cooling circuit 10 of the vehicle.

The valve assembly 20 comprises a normally closed valve 22 and a solenoid actuator 24 coupled to the normally closed valve 22.

In the initial state, the normally closed valve 22 is in a closed position, from which it may be moved into an open position by means of the solenoid actuator 24. In order to hold the valve 22 in the closed position, it may, for example, be loaded by a spring element that holds the valve 22 in the closed position as long as no force is applied on the valve 22 that exceeds the spring force of the spring element.

The solenoid actuator 24 comprises a solenoid 26 and a plunger 28. The solenoid 26 may move the plunger 28 in order to move the valve 22 from a closed position into an open position. This may be done by energizing the solenoid 26, which exerts a force on the plunger 28 and may lead to a displacement of the plunger 28. The displacement of the plunger 28 is also accompanied by an adjustment of the valve 22 from the closed position to the open position.

The valve assembly 20 further comprises current sensor 30, which is configured for detecting a current. The current may be measured, for example, directly at the solenoid actuator 24, at the solenoid 26, at an inverter associated with the solenoid actuator 24 or at a circuit of the inverter which is present, for example, when energizing the solenoid 26. Further, Figure 2 only shows a schematic configuration. Accordingly, the positioning of the current sensor 30 is only to be understood as an example. In particular, the current sensor 30 may be positioned in the vicinity of the solenoid actuator 24, an inverter associated with the solenoid actuator 24 or a circuit of the inverter.

Alternatively, it is also possible that the current sensor 30 may be implemented in the form of a software component. Consequently, the current sensor 30 does not necessarily have to be a physical sensor. In particular, the software component may be the driver of an inverter, whereby the inverter is assigned to the solenoid actuator.

The valve assembly 20 further comprises an ambient temperature sensor 31, which is configured for detecting an ambient temperature around the valve 22. Here too, Figure 2 only shows a schematic configuration. Accordingly, the positioning of the ambient temperature sensor 31 is only to be understood as an example. In particular, the ambient temperature sensor 31 may be an ambient temperature sensor provided by the vehicle.

To summarize, it is noted that all of the above-mentioned sensors are represented schematically only. Moreover, each of the above-mentioned sensors may be realized as a physical sensor, i.e. a physical device. Alternatively, one or more of the above-mentioned sensors may be realized as a software component, in particular as a driver on a vehicle component.

Furthermore, the valve assembly 20 further comprises a data processing apparatus 32 which is communicatively connected to the solenoid actuator 24.

In the present example, the data processing apparatus 32 is also communicatively coupled to the current sensor 30 and the ambient temperature sensor 31.

The data processing apparatus 32 comprises a data storage unit 34 and a data processing unit 36.

The data storage unit 34 comprises a computer-readable storage medium 38.

On the computer-readable storage medium 38, there is a computer program 40 provided.

The computer program 40 and, thus, also the computer-readable storage medium 38, comprise instructions which, when executed by the data processing unit 36, or, more generally speaking, a computer, cause the computer or the data processing unit 36 to carry out a method for determining a state of a valve 22 for a cooling circuit 10 of a vehicle and a method for operating a valve assembly 20 for a cooling circuit 10 of a vehicle.

It is conceivable that the computer comprises or is an electronic control unit (ECU) and/or microcontroller unit (MCU).

Consequently, the data storage unit 34 and the data processing unit 36 form means for carrying out the method for determining a state of a valve 22 for a cooling circuit 10 of a vehicle and a method for operating a valve assembly 20 for a cooling circuit 10 of a vehicle.

A first step S1 of the method for operating a valve assembly 20 for a cooling circuit 10 of a vehicle comprises requesting the valve 22 to open. When requesting the valve 22 to open, the solenoid actuator 24 is controlled accordingly via the data processing apparatus 32. Thus, to adjust the valve 22, the solenoid 26 of the solenoid actuator 24 is energized in order to exert a force on the plunger 28 and to be able to adjust the valve 22 from the closed position to the open position via the plunger 28.

A second step S2 of method for operating a valve assembly 20 for a cooling circuit 10 of a vehicle comprises determining a state of the valve 22 using the method for determining a state of a valve 22 for a cooling circuit 10 of a vehicle.

Here, the first data indicative of a current in the solenoid actuator 24 is obtained after the valve 22 has been requested to open. This constitutes a first step S11 of the method for determining the state of the valve 22 for the cooling circuit 10 of a vehicle.

The current may be obtained from the current sensor 30 which for example may provide a number of measurement samples.

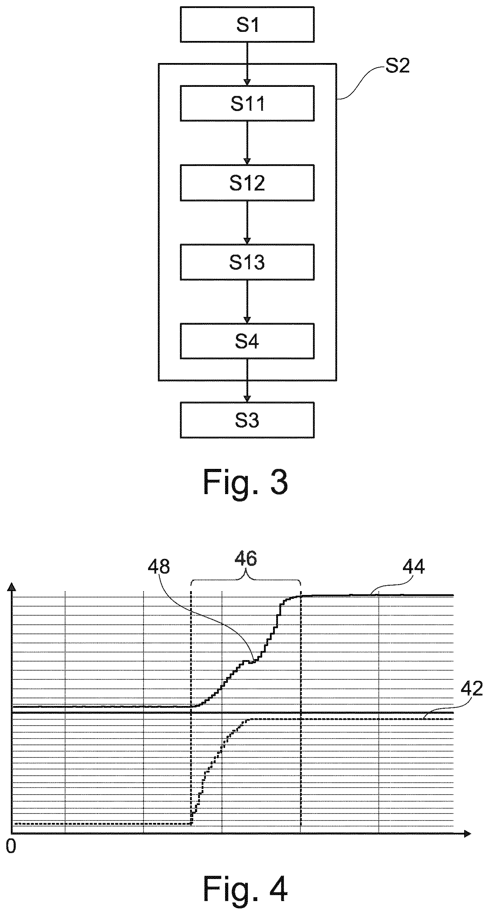

Figure 4 shows an exemplary diagram in which the current and the voltage of the solenoid 26 of the solenoid actuator 24 are plotted over time.

Two measurements 42, 44 are shown in the diagram. The measurements 42 represents the course of the voltage when requesting the valve 22 to open, while the measurements 44 represents the course of the current when requesting the valve 22 to open. The measurements 42, 44 were measured with a valve 22 that is not stuck and was therefore adjusted from a closed position to an open position. In other words, the valve 22 was operating normally.

It is noted that even though the measurements 42, 44 are represented as curves in Figure 4, it is possible that the measurements 42, 44 comprises a finite amount of samples. In this case, the curves may be fitted to these samples.

In the present example, the first data is indicative of a transient current in the solenoid actuator 24 after the valve 22 has been requested to open.

In the diagram shown in Figure 4, a transient state 46 is indicated by the dashed lines, whereby transient current is present in this transient state 46.

This means that the first data needs to cover the time directly after requesting the valve 22 to open. In this example, the time is 80 ms after the request to open the valve 22.

It can be seen in the diagram shown in Figure 4 that the measurements 44 of the current in the transient state 46 comprises a current dip 48. This is because the current is influenced by a change of impedance of the solenoid actuator 24, or more precisely of the solenoid 26 of the solenoid actuator 24, due to a plunger 28 movement. Conversely, this current dip 48 is only present if the valve 22 is not stuck and has actually opened, as only in this case is there a movement of the plunger 28 which influences the impedance of the solenoid 26.

In the event that the transient current in the transient state 46 does not comprise a current dip 48, this indicates that the valve 22 is stuck.

A missing current dip 48 indicates that the impedance of the solenoid actuator 24 has not been influenced by a movement of the plunger 28, so that the voltage in the transient state 46 also has no corresponding current dip 48. Consequently, in this case the valve 22 is not moved from the closed position to the open position.

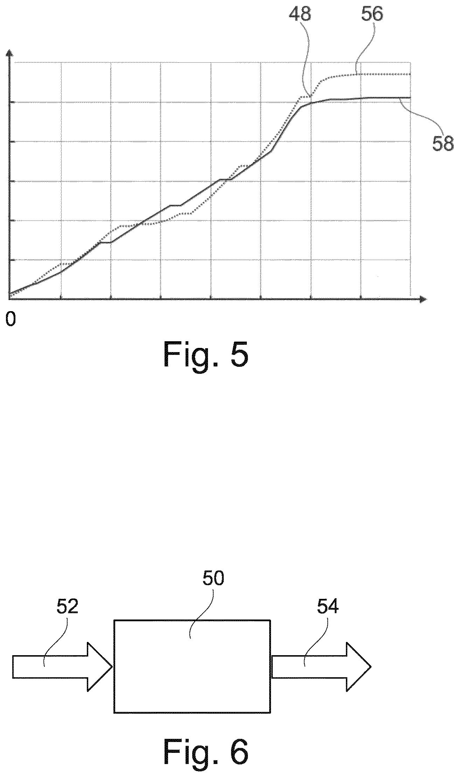

Figure 5 shows an exemplary diagram in which the current of the solenoid 26 of the solenoid actuator 24 is plotted over time in the transient state 46, whereby the displayed current measurements were filtered using a hardware (HW) filter.

Two measurements 56, 58 are shown in the diagram. The measurement 56 represents the course of the filtered current when the valve 22 is requested to open and actually opens, while the measurement 58 represents the course of the filtered current when the valve 22 is requested to open, but remains closed because it is stuck.

It can be seen here that after filtering, the current dip 48 may only be recognized to a reduced extent in the measurement 56.

In a second step S12 of the method for determining a state of a valve 22 for a cooling circuit 10 of a vehicle it is determined whether the valve 22 has actually opened or has remained closed based on the first data.

Step S12 may be based on one or more different variants. These variants are explained in more detail below. It is conceivable that step S12 may be based on a single one of the variants explained below or on a combination of these.

Step S12 may be based on a trained data model 50. Figure 6 shows such a trained data model 50 with an input 52 and an output 54 for the trained data model 50.

In the present example, the input 52 is the first data and the output 54 is second data. The second data will be discussed in more detail further below.

Consequently, the trained data model 50 determines whether the valve 22 has actually opened or has remained closed based on the first data.

In the present example, the trained data model 50 is based on machine learning.

Alternatively or in addition, step S12 may be based on a Discrete Fourier Transform of the current in the solenoid actuator 24.

In this case the determining whether the valve 22 has actually opened or has remained closed comprises:
- Fourier transforming the first data into a frequency domain,
- selecting a frequency in the frequency domain, and
- comparing the selected frequency to a predefined frequency threshold.

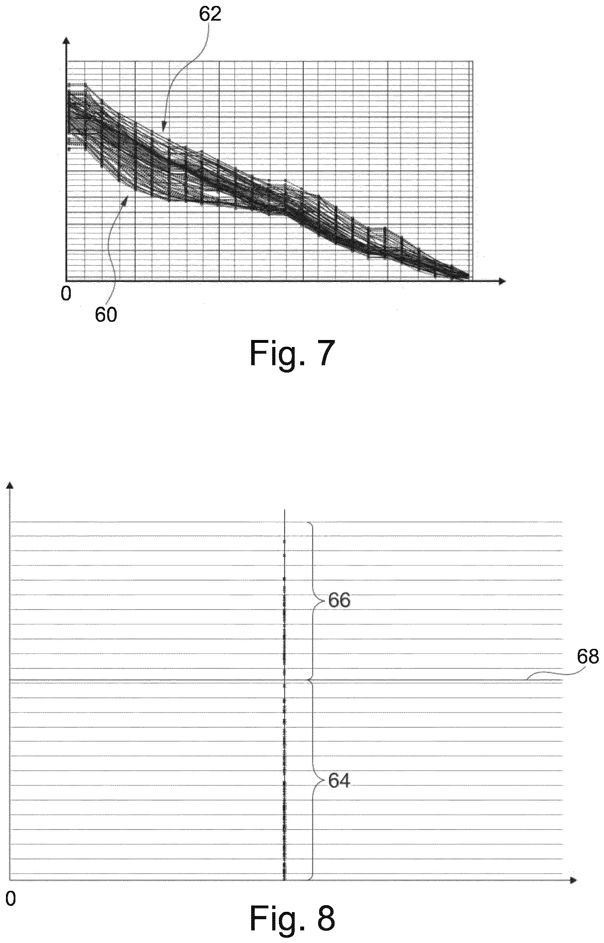

Figure 7 shows an exemplary diagram in which two groups of measurements 60, 62 of filtered current samples of the solenoid 26 of the solenoid actuator 24 are shown. The group of measurements 60 represents the course of the filtered current when the valve 22 is requested to open and actually opens, while the group of measurements 62 represents the course of the filtered current when the valve 22 is requested to open and remains closed because it is stuck.

This is merely an exemplary representation of many measurements of the filtered current of the solenoid actuator 24.

In an actual driving operation, only one of these exemplary measurements of the current of the solenoid actuator 24 corresponding to the first data is present.

The measurements 60, 62 can be Fourier transformed into a frequency domain.

Figure 8 shows an exemplary diagram in which the value of a frequency in the frequency domain is plotted against a selected frequency.

In the present example, the selected frequency is the first fundamental, wherein the inductivity of the solenoid 26 of the solenoid actuator 24 is proportional to the first fundamental frequency.

Two groups of calculated points 64, 66, i.e. two groups of calculated frequencies, are shown in the diagram.

In an actual driving operation, only one of these exemplary measurement points corresponding to a selected frequency is present after the valve 22 is requested to open.

Further a predefined frequency threshold 68 is shown in the diagram using a horizontal line.

All calculated points 64 that lie below the predefined frequency threshold 68 are points that indicate that the valve 22 has been requested to open and has moved from the closed position to the open position. Consequently, valve 22 is not stuck in these cases.

Furthermore, all calculated points 66 that are above the predefined frequency threshold 68 are points that indicate that the valve 22 has been requested to open and has not moved from the closed position to the open position. Consequently, valve 22 is stuck in these cases.

In an actual driving operation, only one point corresponding to a selected frequency is present after the valve 22 is requested to open and is compared with the predefined frequency threshold 68. Therefore, in this determination only a single frequency in the frequency domain is used and is compared with a single predefined frequency threshold 68.

The predefined frequency threshold 68 may be based on experimentally determined data. Additionally or alternatively, the predefined frequency threshold 68 may also be based on historical data collected during a driving operation.

Here, the predefined frequency threshold 68 may be determined based on experimentally determined data and/or historical data, which are also first Fourier transformed into a frequency domain. Subsequently, a frequency in the frequency domain may also be selected here, and a predefined frequency threshold 68 may be derived on the basis of the experimentally determined data and/or historical data.

Alternatively or in addition, step S12 may be based on a cumulative sum of the current in the solenoid actuator 24.

In this case the determining whether the valve 22 has actually opened or has remained closed comprises:
- calculating a sum of a plurality of samples of the first data, and
- comparing the calculated sum to a predefined sum threshold.

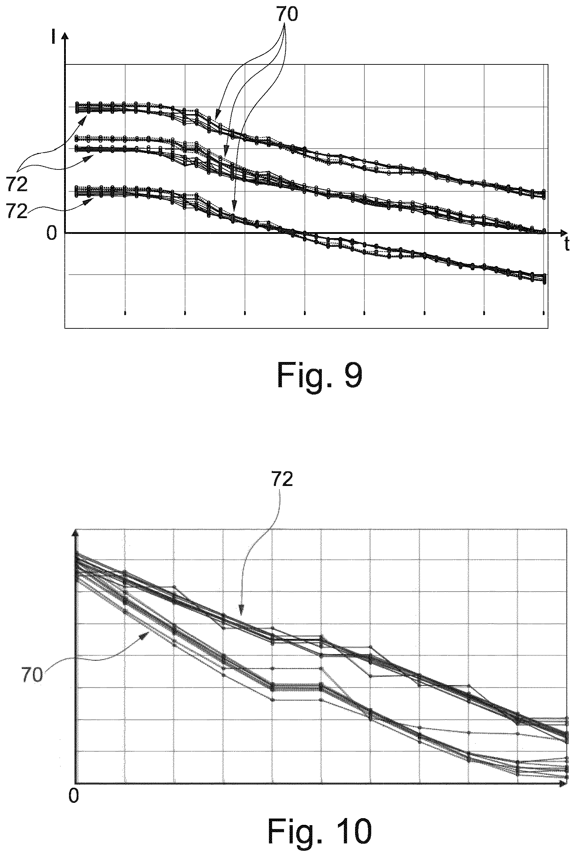

Figure 9 shows an exemplary diagram in which current samples of the solenoid 26 of the solenoid actuator 24 are plotted over time in the transient state 46.

Two groups of measurements 70, 72 are shown in the diagram in triplicate version.

The group of measurements 70 represents the course of the filtered current when the valve 22 is requested to open and actually opens, while the group of measurements 72 represents the course of the filtered current when the valve 22 is requested to open and remains closed because it is stuck.

This is merely an exemplary representation of many measurements of the current of the solenoid actuator 24.

In an actual driving operation, only one of these exemplary measurements of the current of the solenoid actuator 24 corresponding to the first data is present.

The groups of measurements 70, 72 represented in the middle show the raw measurements 70, 72.

In the lowest groups of measurements 70, 72 the offset is removed using a mean of the groups of measurements 70, 72.

The upper groups of measurements 70, 72 represent measurements that have been shifted in the Y direction of the diagram in such a way that all values of the groups of measurements 70, 72 are positive.

Figure 10 shows an exemplary diagram in which current samples of the solenoid 26 of the solenoid actuator 24 are plotted over time in the transient state 46.

Here, the upper groups of measurements 70, 72 from Figure 9 are shown in a sliced representation. This means that Figure 10 represents a cutout of the measurements of Figure 9.

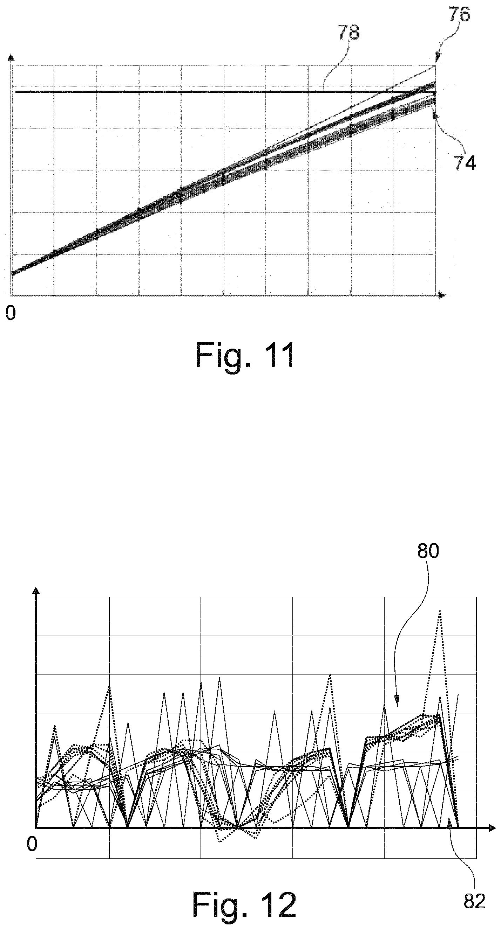

Figure 11 shows an exemplary diagram in which calculated groups of calculated points 74, 76 are shown, wherein each point corresponds to a sum value of the groups of measurements 70, 72 as illustrated in Figure 10.

In an actual driving operation, only one point of the calculated groups of calculated points 74, 76 corresponding to a calculated sum of the first data is present after the valve 22 is requested to open.

Accordingly, a sum of a plurality of samples of the first data may also be calculated.

Further a predefined sum threshold 78 is shown in the diagram.

All calculated points of the group of calculated points 74 lie below the predefined sum threshold 78. These are points that indicate that the valve 22 has been requested to open and has moved from the closed position to the open position. Consequently, valve 22 is not stuck in these cases.

Furthermore, all calculated points of the group of sum values 76 are above the predefined sum threshold 78. These are points that indicate that the valve 22 has been requested to open and has not moved from the closed position to the open position. Consequently, valve 22 is stuck in these cases.

In an actual driving operation, only one point which corresponds to a calculated sum is present after the valve 22 is requested to open and is compared with the predefined sum threshold 78.

The predefined sum threshold 78 may be based on experimentally determined data. Additionally or alternatively, the predefined sum threshold 78 may also be based on historical data collected during a driving operation.

Here, the predefined sum threshold 78 may be determined based on experimentally determined data and/or historical data, from which a sum calculated, as described above. Subsequently, a predefined sum threshold 78 may be derived based on the experimentally determined data and/or historical data.

Alternatively or in addition, step S12 may be based on a derivative of the current in the solenoid actuator 24.

In this case the determination whether the valve 22 has actually opened or has remained closed comprises:
- calculating a derivative of the current based on the first data,
- filtering the calculated derivative,
- comparing the filtered derivative to a predefined derivative threshold.

Figure 12 shows an exemplary diagram in which a plurality of unfiltered derivatives of current samples of a plurality of measurement samples forming two groups of derivatives 80, 82 are shown.

In an actual driving operation, only one of these exemplary derivatives of the current of the solenoid actuator 24 corresponding to a calculated derivative of the current based on the first data is present.

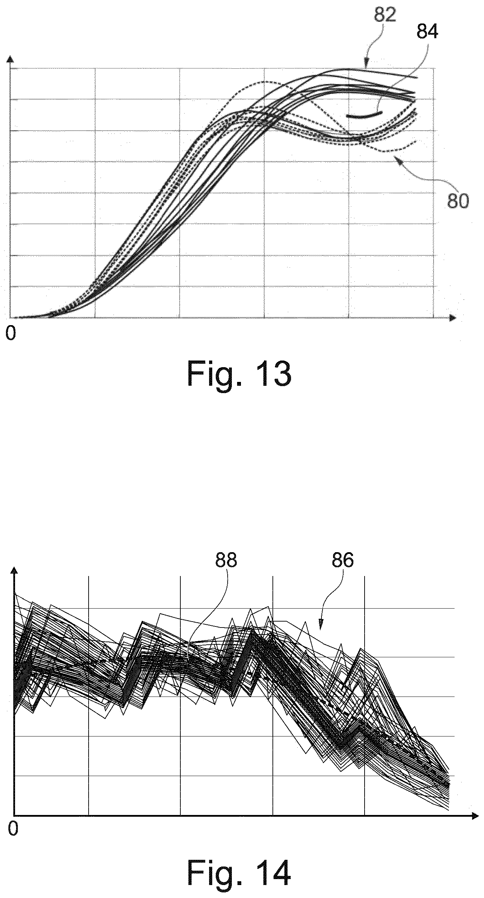

Figure 13 shows an example of a diagram in which two filtered groups of derivatives 80, 82 are shown. Thus, in order to produce Figure 13, the groups of derivatives 80, 82 as shown in Figure 12 are filtered.

Further a predefined derivative threshold 84 is shown in the diagram in the form of a curve.

The filtered derivative to the predefined derivative threshold 84 may now be compared in the section in which the curve of the predefined derivative threshold 84 lies.

In the present example, filtering the calculated derivative may comprise applying Butterworth Low Pass (LP) filter. In particular, filtering the calculated derivative comprises applying a third order Butterworth LP filter.

Here, the group of derivatives 80 represents, by way of example, the measurements that runs in the section of the derivative threshold 84 below the derivative threshold 84. This indicates that the valve 22 has been requested to open and has moved from the closed position to the open position. Consequently, valve 22 is not stuck in these cases.

Furthermore, the group of derivatives 82 represents, by way of example, the course that runs in the section of the derivative threshold 84 above the derivative threshold 84. This indicates that the valve 22 has been requested to open and has not moved from the closed position to the open position. Consequently, valve 22 is stuck in these cases.

In an actual driving operation, only one measurement corresponding to a filtered derivative is present after the valve 22 is requested to open and is compared with the derivative threshold 84.

The derivative threshold 84 may be based on experimentally determined data. Additionally or alternatively, the derivative threshold 84may also be based on historical data collected during a driving operation.

Here, the derivative threshold 84 may be determined based on experimentally determined data and/or historical data, from which a derivative is calculated, as described above. Subsequently, the derivative may be filtered and the derivative threshold 84 may be derived on the basis of the experimentally determined data and/or historical data.

Alternatively or in addition, step S12 may be based on an error indicator of the current in the solenoid actuator 24 with respect to a regression curve.

In this case the determination whether the valve 22 has actually opened or has remained closed comprises:
- obtaining third data indicative of a regression curve for a historic current in the solenoid actuator 24 after the valve 22 has been requested to open,
- calculating an error indicator indicative of a difference between the first data and the third data, and
- comparing the error indicator to an error indicator threshold.

According to a first alternative, the third data indicative of a regression curve may be obtained as follows.

Figure 14 shows an exemplary diagram in which a group of measurements 86 of current samples of the solenoid 26 of the solenoid actuator 24 is shown, to which a high pass (HP) filter was applied. The group of measurements 86 represents the course of the filtered current of a variety of measurement samples when the valve 22 is requested to open and actually opens.

Further, a curve 88 is shown, which represents a regression curve of the group of measurements 86.

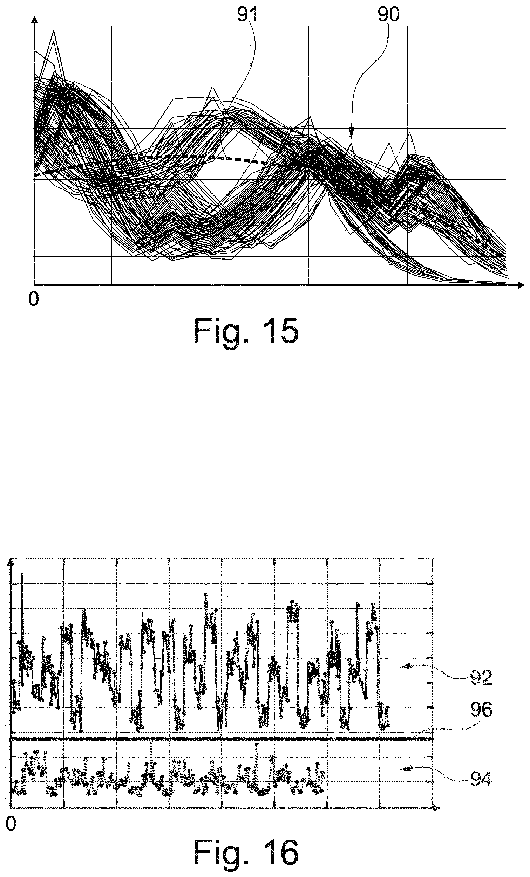

Figure 15 shows an exemplary diagram in which a group of measurements 90 of current samples of the solenoid 26 of the solenoid actuator 24 is shown, to which a high pass (HP) filter was applied. The group of measurements 86 represents the course of the filtered current of a variety of measurement samples when the valve 22 is requested to open and remains closed because it is stuck.

Further, a curve 91 is shown, which represents a regression curve of the group of measurements 90.

For the above third data indicative of a regression curve, one of the measurements 88, 91 mentioned may be used.

In the present example, the regression curve is curve 91.

In the present example, the HP filter in both of the cases described above is a Butterworth HP-filter.

Figure 16 shows an exemplary diagram in which two groups of calculated points 92, 94 are shown, wherein each corresponds to an error indicator for each measurement of the groups of measurements 86, 90.

In an actual driving operation, only one of these calculated points corresponding to an error indicator indicative is present after the valve 22 is requested to open.

Further an error indicator threshold 96 is shown in the diagram.

All points of the group of calculated points 92 lie above the error indicator threshold 96. These are calculated based on the group of measurements 86. Consequently, these points are points that indicate that the valve 22 has been requested to open and has moved from the closed position to the open position. Consequently, valve 22 is not stuck in these cases.

Furthermore, all points of the group of calculated points 94 lie below the error indicator threshold 96. These are calculated based on the group of measurements 90. Consequently, these points are points that indicate that the valve 22 has been requested to open and has not moved from the closed position to the open position. Consequently, valve 22 is stuck in these cases.

In an actual driving operation, only one point corresponding to an error indicator is present after the valve 22 is requested to open and is compared with the error indicator threshold 96.

According to a second alternative, the third data indicative of a regression curve may be obtained as follows.

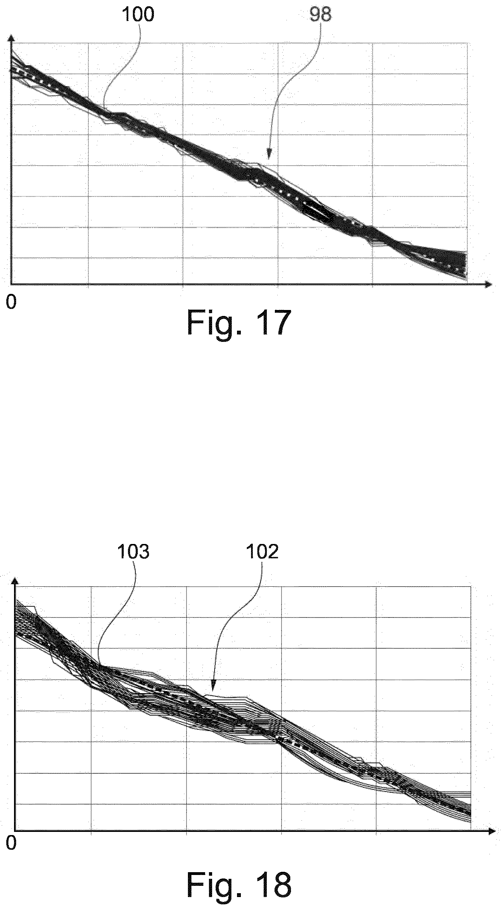

Figure 17 shows an exemplary diagram in which a group of measurement 98 of normalized current samples of the solenoid 26 of the solenoid actuator 24 is shown. The group of measurements 98 represents the course of the normalized current when the valve 22 is requested to open and actually opens.

Further, a curve 100 is shown, which represents a regression curve of the group of measurements 98.

Figure 18 shows an exemplary diagram in which a group of measurements 102 of normalized current samples of the solenoid 26 of the solenoid actuator 24 is shown. The group of measurements 102 represents the course of the normalized current when the valve 22 is requested to open and remains closed because it is stuck.

Further, a curve 103 is shown, which represents a regression curve of the group of measurements 102.

For the above third data indicative of a regression curve, one of the measurements 100, 103 mentioned here may be used.

In the present example, the regression curve is curve 103.

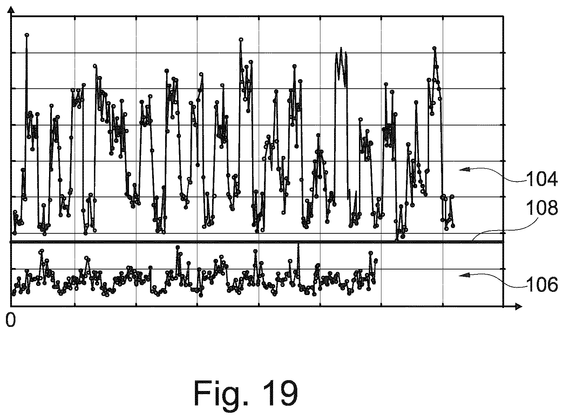

Figure 19 shows an exemplary diagram in which two groups of calculated points 104, 106 which each correspond to an error indicator for each measurement of the groups of measurements 98, 102 are shown. In an actual driving operation, only one of these calculated points corresponding to an error indicator indicative is present after the valve 22 is requested to open.

Further an error indicator threshold 108 is shown in the diagram.

All points of the group of calculated points 104 lie above the error indicator threshold 108. These are calculated based on the group of measurements 98. Consequently, these points are points that indicate that the valve 22 has been requested to open and has moved from the closed position to the open position. Consequently, valve 22 is not stuck in these cases.

Furthermore, all points of the group of calculated points 106 lie below the error indicator threshold 108. These are calculated based on the group of measurements 102. Consequently, these points are points that indicate that the valve 22 has been requested to open and has not moved from the closed position to the open position. Consequently, valve 22 is stuck in these cases.

In an actual driving operation, only one single point corresponding to an error indicator indicative is present after the valve 22 is requested to open and is compared with the error indicator threshold 108.

In both alternatives presented above, the error indicator threshold 96, 108 may be determined based on experimentally determined data and/or historical data, from which an error indicator is calculated, as described above. Subsequently, the error indicator threshold 96, 108 may be derived on the basis of the experimentally determined data and/or historical data.

In a third step S13 of the method for determining a state of a valve 22 for a cooling circuit 10 of a vehicle fourth data indicative of an environmental condition of the valve 22 is obtained. Furthermore, determining whether the valve 22 has actually opened or has remained closed from the second step S12 is carried out further based on the fourth data.

In the present example, the fourth data is indicative of an ambient temperature and/or an ambient temperature history.

The ambient temperature may be obtained from the ambient temperature sensor 31.

According to an example, it is also possible to select one of the variants for determining whether the valve 22 has actually opened or has remained closed based on the first data as a function of the fourth data.

In a fourth step S14 of the method for determining a state of a valve 22 for a cooling circuit 10 of a vehicle second data indicative of the state of the valve 22 is provided.

This second data may indicate whether the valve 22 has actually opened or has remained closed.

A third step S3 of the method for operating a valve assembly 20 for a cooling circuit 10 of a vehicle comprises triggering a mitigation measure if the valve 22 has remained closed or, otherwise, abandoning the method.

In particular, a mitigation measure may be directed to a driving operation of the vehicle. Since a stuck valve 22 could result in overheating of a vehicle component 18, the mitigation measure ensures that as little waste heat as possible is generated at the vehicle component 18 concerned by the stuck valve 22 so that overheating may be prevented or at least reduced.

At the same time, the vehicle may continue to be driven. Otherwise, the method is abandoned, as in this case the valve 22 is not stuck and therefore functions properly. Accordingly, no further steps are necessary in this case to protect the vehicle component 18, as these may be cooled anyway via the properly functioning valve 22 that allows a coolant flow.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: cooling circuit
- 12: coolant channel
- 14: valve system
- 16: pump
- 18: vehicle component
- 20: valve assembly
- 22: valve
- 24: solenoid actuator
- 26: solenoid
- 28: plunger
- 30: current sensor
- 31: ambient temperature sensor
- 32: data processing apparatus
- 34: data storage unit
- 36: data processing unit
- 38: computer-readable storage medium
- 40: computer program
- 42: measurement
- 44: measurement
- 46: transient state
- 48: current dip
- 50: trained data model
- 52: input
- 54: output
- 56: measurement
- 58: measurement
- 60: group of measurements
- 62: group of measurements
- 64: group of calculated points
- 66: group of calculated points
- 68: predefined frequency threshold
- 70: group of measurements
- 72: group of measurements
- 74: group of calculated points
- 76: group of calculated points
- 78: predefined sum threshold
- 80: group of derivatives
- 82: group of derivatives
- 84: predefined derivative threshold
- 86: group of measurements
- 88: curve
- 90: group of measurements
- 91: curve
- 92: group of calculated points
- 94: group of calculated points
- 96: error indicator threshold
- 98: group of measurements
- 100: curve
- 102: group of measurements
- 103: curve
- 104: group of calculated points
- 106: group of calculated points
- 108: error indicator threshold

- S1: first step of the method for operating a valve assembly
- S2: second step of the method for operating a valve assembly
- S3: third step of the method for operating a valve assembly
- S11: first step of the method for determining a state of a valve
- S12: second step of the method for determining a state of a valve
- S13: third step of the method for determining a state of a valve
- S14: fourth step of the method for determining a state of a valve

## Claims

1. A method for determining a state of a valve (22) for a cooling circuit (10) of a vehicle, wherein the valve (22) is a normally closed valve (22) and wherein the valve (22) is coupled to a solenoid actuator (24), the method comprising
- obtaining first data indicative of a current in the solenoid actuator (24) after the valve (22) has been requested to open (S11),
- determining whether the valve (22) has actually opened or has remained closed based on the first data (S12), and
- providing second data indicative of the state of the valve (22) (S13).

2. The method according to claim 1, wherein the first data is indicative of a transient current in the solenoid actuator (24) after the valve (22) has been requested to open.

3. The method according to claim 2, wherein the transient current comprises a current dip following a change of impedance of the solenoid actuator (24) due to a plunger (28) movement, if the valve (22) has actually opened, and, otherwise, the transient current does not comprises a current dip.

4. The method according to any one of the preceding claims, wherein determining whether the valve (22) has actually opened or has remained closed is based on a trained data model, wherein the first data is an input for the trained data model and wherein the second data is an output of the trained data model.

5. The method according to any one of the preceding claims, wherein determining whether the valve (22) has actually opened or has remained closed comprises:
- Fourier transforming the first data into a frequency domain,
- selecting a frequency in the frequency domain, and
- comparing the selected frequency to a predefined frequency threshold (68).

6. The method according to any one of the preceding claims, wherein determining whether the valve (22) has actually opened or has remained closed comprises:
- calculating a sum of a plurality of samples of the first data, and
- comparing the calculated sum to a predefined sum threshold (78).

7. The method according to any one of the preceding claims, wherein determining whether the valve (22) has actually opened or has remained closed comprises:
- calculating a derivative of the current based on the first data,
- filtering the calculated derivative,
- comparing the filtered derivative to a predefined derivative threshold (84).

8. The method according to any one of the preceding claims, wherein determining whether the valve (22) has actually opened or has remained closed comprises:
- obtaining third data indicative of a regression curve for a historic current in the solenoid actuator (24) after the valve (22) has been requested to open,
- calculating an error indicator indicative of a difference between the first data and the third data, and
- comparing the error indicator to an error indicator threshold (96, 108).

9. The method according to any one of the preceding claims, further comprising obtaining fourth data indicative of an environmental condition of the valve (22) and determining whether the valve (22) has actually opened or has remained closed further based on the fourth data (S14).

10. A method for operating a valve assembly (20) for a cooling circuit (10) of a vehicle, the valve assembly (20) comprising a normally closed valve (22) and a solenoid actuator (24) coupled to the normally closed valve (22), the method comprising:
- requesting the valve (22) to open (S1),
- determining a state of the valve (22) using the method of any one of the preceding claims (S2),
- triggering a mitigation measure if the valve (22) has remained closed or, otherwise, abandoning the method (S3).

11. A data processing apparatus (32) comprising means for carrying out the method of claims 1 to 9 and/or the method of claim 10.

12. A computer program (40) comprising instructions which, when the computer program (40) is executed by a computer, cause the computer to carry out the method of claims 1 to 9 and/or the method of claim 10.

13. A computer-readable storage medium (38) comprising instructions which, when executed by a computer, cause the computer to carry out the method of claims 1 to 9 and/or the method of claim 10.

14. A valve system (14) comprising the data processing apparatus (32) of claim 11 and a valve assembly (20) for a cooling circuit (10) of a vehicle, the valve assembly (20) comprising a normally closed valve (22) and a solenoid actuator (24) coupled to the normally closed valve (22), wherein the solenoid actuator (24) is communicatively connected to the data processing apparatus (32).

15. A cooling circuit (10) for a vehicle, the cooling circuit (10) comprising a coolant channel (12) and a valve assembly (20) according to claim 14, wherein the valve assembly (20) is fluidically coupled to the coolant channel (12).
